# EUROPÄISCHE PATENTSCHRIFT

(11) **EP 3 945 208 B1**
(45) Veröffentlichungstag und Bekanntmachung des Hinweises auf die Patenterteilung: **15.05.2024**
(21) Anmeldenummer: 21186887.2
(22) Anmeldetag: 21.07.2021
(51) Int. Cl.: F03D 1/06, F03D 7/02

(54) **ROTORBLATT FÜR EINE WINDENERGIEANLAGE UND ZUGEHÖRIGE WINDENERGIEANLAGE**
WIND ENERGY SYSTEM AND ROTOR BLADE FOR A WIND ENERGY SYSTEM
PALE DE ROTOR POUR UNE ÉOLIENNE ET ÉOLIENNE ASSOCIÉE

(30) Priorität: 27.07.2020 DE 102020119737
(43) Veröffentlichungstag der Anmeldung: 02.02.2022
(73) Patentinhaber: Wobben Properties GmbH, 26607 Aurich (DE)
(72) Erfinder: VON ALBEDYLL, Andreas, 28209 Bremen (DE); BEKIROPOULOS, Dimitrios, 26607 Aurich (DE)
(74) Vertreter: Eisenführ Speiser

(56) Entgegenhaltungen:
- WO-A2-2011/157849
- DE-A1-102014 205 016

## Beschreibung

Die Erfindung betrifft ein Rotorblatt für eine Windenergieanlage, einen Rotor für eine Windenergieanlage und eine Windenergieanlage.

Windenergieanagen sind grundsätzlich bekannt, sie erzeugen eine elektrische Leistung aus Wind. Windenergieanlagen betreffen in der Regel sogenannte Horizontalachsen-Windenergieanlagen, bei denen die Rotorachse im Wesentlichen horizontal ausgerichtet ist und die Rotorblätter eine im Wesentlichen senkrechte Rotorfläche überstreichen. Windenergieanlagen umfassen neben einem an einer Gondel angeordneten Rotor in der Regel einen Turm, auf dem die Gondel mit dem Rotor um eine im Wesentlichen vertikal ausgerichtete Achse drehbar angeordnet ist. Der Rotor umfasst in der Regel drei Rotorblätter, wobei auch Rotoren mit weniger oder mehr als drei Rotorblättern möglich sind. Die Rotorblätter sind schlanke Bauteile, die häufig aus faserverstärktem Kunststoff hergestellt sind.

Durch aerodynamische Effekte an den Rotorblättern emittieren Windenergieanlagen Schall. Bei der Schallemission von Windenergieanlagen müssen in der Regel gesetzliche Auflagen berücksichtigt werden, insbesondere sollten gesetzlich vorgegebene Grenzwerte nicht überschritten werden. Darüber hinaus ist eine geringe Schallemission dahingehend vorteilhaft, um eine Akzeptanz bei von der Schallemission betroffenen Personen zu erreichen. Es ist daher eines der Ziele bei der Entwicklung von Rotorblättern, diese möglichst derart zu gestalten, dass die Schallemission gering ist.

Das Deutsche Patent- und Markenamt hat in der Prioritätsanmeldung zu vorliegender Anmeldung folgenden Stand der Technik recherchiert: WO 2011/157849 A2, EP 3 098 436 A1, WO 2014/207015 A1, US 2014/0286784 A1, WO 2009/025549 A1, DE 10 2012 102 746 A1, DE 10 2014 205 016 A1, EP 2 216 545 A2.

WO 2011/157849 A2 zeigt ein Rotorblatt für eine Windenergieanlage, welches im Bereich seiner Hinterkante ein Hinterkantenteil aufweist, an dem sich von der Saug- bis zur Druckseite hindurch erstreckende Durchgänge vorgesehen sind.

In DE 10 2014 205 016 A1 ist ein Rotorblatt einer Windenergieanlage offenbart, das eine Luftströmungsvorrichtung mit einem Verschlusselement im Bereich der Rotorblatthinterkante aufweist. Das Verschlusselement ist elastisch ausgebildet und in Richtung seiner Schließstellung vorgespannt. Mit Einwirken eines Unterdrucks auf das Verschlusselement wird eine auf der Saugseite des Rotorblattes ausmündende Auslassöffnung geöffnet.

Es ist daher eine Aufgabe der Erfindung, ein Rotorblatt für eine Windenergieanlage, einen Rotor für eine Windenergieanlage und eine Windenergieanlage bereitzustellen, die einen oder mehrere der genannten Nachteile vermindern oder beseitigen. Insbesondere ist es eine Aufgabe der Erfindung, eine Lösung bereitzustellen, die eine geringere Schallemission von Rotorblättern an Windenergieanlagen ermöglicht.

Gemäß einem ersten Aspekt wird diese Aufgabe gelöst durch ein Rotorblatt für eine Windenergieanlage mit den Merkmalen von Anspruch 1.

Der Erfindung liegt die Erkenntnis zugrunde, dass die Schallemission wesentlich an der Hinterkante eines Rotorblattes entsteht. Die Erfinder haben herausgefunden, dass durch die Akustiköffnung der scharfe Impedanzsprung beim Auftreffen der in der Grenzschicht auftretenden Wanddruckfluktuation auf die Hinterkante abgemildert und somit eine geringere Schallemission auftritt. Zudem wurde herausgefunden, dass die Wirbelstruktur durch die Akustiköffnung in vorteilhafter Weise beeinflusst wird.

Das Rotorblatt erstreckt sich vorzugsweise von der Rotorblattwurzel hin zu einer Rotorblattspitze mit der Rotorblattlänge. Orthogonal zu der Richtung der Rotorblattlänge erstreckt sich das Rotorblatt in Richtung der Profiltiefe. Die Profiltiefe stellt sich zwischen der Vorderkante, die im Betrieb dem Wind zugewandt ist, und der Hinterkante, die im Betrieb dem Wind abgewandt ist, ein. Orthogonal zu der Richtung der Rotorblattlänge und orthogonal zu der Richtung der Profiltiefe erstreckt sich das Rotorblatt in Richtung der Profildicke. Entlang der Profiltiefe stellt sich üblicherweise eine nicht konstante Profildicke ein, die beispielsweise von der Vorderkante hin zu einem Bereich maximaler Profildicke ansteigt und von dem Bereich maximaler Profildicke hin zur Hinterkante wieder abnimmt.

An die Hinterkante des Rotorblatts grenzt der Hinterkantenbereich an. Der Hinterkantenbereich ist insbesondere als ein Abschnitt des Rotorblattes zu verstehen, der an die Hinterkante angrenzt. Der Hinterkantenbereich wird insbesondere durch einen Abschnitt der Saugseite und durch einen Abschnitt der Druckseite ausgebildet. Ferner wird der Hinterkantenbereich durch die Hinterkante als solche mit ausgebildet. Der Hinterkantenbereich erstreckt sich vorzugsweise in Richtung der Rotorblattlänge, in Richtung der Profiltiefe und/oder in Richtung der Profildicke. Insbesondere erstreckt sich der Hinterkantenbereich in Richtung der Profiltiefe mit der Bereichserstreckung. Die Bereichserstreckung beträgt weniger als 20 % der Profiltiefe. Insbesondere ist es bevorzugt, dass die Bereichserstreckung weniger als 10 % der Profiltiefe beträgt.

Der Hinterkantenbereich weist die mindestens eine Akustiköffnung auf. Die Akustiköffnung ist beispielsweise als Ausnehmung ausgebildet. Insbesondere ist es bevorzugt, dass sich die Akustiköffnung von der Saugseite hin zur Druckseite erstreckt und ferner vorzugsweise als Durchgangsöffnung ausgebildet ist. Die Akustiköffnung weist vorzugsweise eine Durchgangsachse auf, die auch gebogen ausgebildet sein kann, die zumindest einen Richtungsanteil in Richtung der Profildicke aufweist. Ferner vorzugsweise kann die Achse der Akustiköffnung auch einen Richtungsanteil in Richtung der Rotorblattlänge aufweisen. Darüber hinaus kann es vorteilhaft sein, wenn die Achse der Akustiköffnung einen Richtungsanteil in Richtung der Profiltiefe aufweist. Es ist darüber hinaus bevorzugt, dass der Hinterkantenbereich eine Vielzahl an Akustiköffnungen aufweist. Beispielsweise kann der Hinterkantenbereich eine poröse Struktur aufweisen, wobei die poröse Struktur die Vielzahl an Akustiköffnungen aufweist. Die poröse Struktur weist vorzugsweise regelmäßig angeordnete Akustiköffnungen auf.

Die Akustiköffnung ist verschließbar ausgebildet. Die geöffnete Akustiköffnung kann zu einer Reduktion der aerodynamischen Leistungsfähigkeit führen. Es ist daher bevorzugt, dass die Akustiköffnung in einem Teillastbereich, insbesondere in einem vorgegebenen Leistungs- und/oder Windgeschwindigkeitsbereich, verschlossen wird, um eine maximal mögliche aerodynamische Leistung zu erzielen. Insbesondere im Volllastbereich, wenn die Nennleistung der Windenergieanlage erreicht ist und zur Drehzahlregelung bereits die Rotorblätter gepitcht werden, ist eine Öffnung der Akustiköffnung bevorzugt, um somit die Schallemission an der Hinterkante zu reduzieren.

Erfindungsgemäß ist zumindest ein Abschnitt des Hinterkantenbereichs durch ein saugseitiges Hinterkantenelement und ein druckseitiges Hinterkantenelement ausgebildet, die in Richtung der Profildicke benachbart zueinander angeordnet sind und wobei zumindest eines der Hinterkantenelemente und/oder eine Blende zwischen den Hinterkantenelementen beweglich angeordnet ist, und vorzugsweise die mindestens eine Akustiköffnung durch eine saugseitige Durchgangsöffnung im saugseitigen Hinterkantenelement und durch eine druckseitige Durchgangsöffnung im druckseitigen Hinterkantenelement ausgebildet ist, wobei die mindestens eine Akustiköffnung in einer Öffnungsposition des beweglich angeordneten Hinterkantenelements geöffnet ist und in einer Schließposition des beweglich angeordneten Hinterkantenelements im Wesentlichen verschlossen ist, und/oder wobei die mindestens eine Akustiköffnung in einer Öffnungsposition der Blende geöffnet ist und in einer Schließposition der Blende im Wesentlichen verschlossen ist.

Das saugseitige Hinterkantenelement und/oder das druckseitige Hinterkantenelement kann bzw. können beweglich angeordnet sein. Insbesondere ist es bevorzugt, dass die Hinterkantenelemente relativ zueinander beweglich angeordnet sind. Es ist insbesondere bevorzugt, dass die Hinterkantenelemente in Richtung der Rotorblattlänge beweglich zueinander angeordnet sind. Die benachbart zueinander angeordneten Hinterkantenelemente können unmittelbar zueinander benachbart sein oder auch voneinander beabstandet sein. Insbesondere ist es bevorzugt, dass die Hinterkantenelemente voneinander beabstandet sind, wenn die Blende zwischen diesen Hinterkantenelementen vorgesehen ist.

Das saugseitige Hinterkantenelement weist die saugseitige Durchgangsöffnung und das druckseitige Hinterkantenelement weist die druckseitige Durchgangsöffnung auf. Die saugseitige Durchgangsöffnung und die druckseitige Durchgangsöffnung sind derart angeordnet und ausgebildet, dass diese die Akustiköffnung ausbilden können. Hierfür sind die Durchgangsöffnungen vorzugsweise angeordnet und ausgebildet, um eine gemeinsame Durchgangsachse ausbilden zu können. Die mindestens eine Akustiköffnung ist in der Öffnungsposition des beweglich angeordneten Hinterkantenelements geöffnet und in einer Schließposition des beweglich angeordneten Hinterkantenelements im Wesentlichen verschlossen. Die Öffnungsposition kann beispielsweise dadurch erreicht werden, dass das saugseitige Hinterkantenelement mit der saugseitigen Durchgangsöffnung so positioniert wird, dass die saugseitige Durchgangsöffnung eine gemeinsame Achse mit der druckseitigen Durchgangsöffnung ausbildet.

Alternativ oder ergänzend kann zwischen den Hinterkantenelementen eine Blende ausgebildet sein. Die Blende weist vorzugsweise Durchgangsöffnungen auf. Die saugseitige Durchgangsöffnung und die druckseitige Durchgangsöffnung der Hinterkantenelemente können bei dem Anordnen einer Blende stets so angeordnet sein, dass diese eine gemeinsame Achse ausbilden und somit die Akustiköffnung durch diese geöffnet ist. Die Blende zwischen den Hinterkantenelementen und somit auch zwischen den Durchgangsöffnungen kann vorzugsweise hin- und herbewegt werden und somit die Durchgangsöffnung der Blende mit der saugseitigen und druckseitigen Durchgangsöffnung fluchten, womit die Akustiköffnung geöffnet ist, sodass die Öffnungsposition realisiert wird, und so angeordnet werden, dass die saugseitige Durchgangsöffnung von der druckseitigen Durchgangsöffnung getrennt ist durch die Blende, sodass die Schließposition realisiert wird.

In einer weiteren bevorzugten Fortbildung des Rotorblatts ist vorgesehen, dass das beweglich angeordnete Hinterkantenelement und/oder die Blende derart anordenbar sind, dass die saugseitige Durchgangsöffnung und die druckseitige Durchgangsöffnung teilweise fluchten, insbesondere indem das beweglich angeordnete Hinterkantenelement und/oder die Blende zwischen der Öffnungsposition und der Schließposition anordenbar ist bzw. sind.

Durch ein teilweises Fluchten der saugseitigen und druckseitigen Durchgangsöffnung wird ein geringerer Leistungsverlust ermöglicht. Das Einstellen der Durchgangsöffnung derart, dass diese teilweise fluchten, ist insbesondere in einem oberen Teillastbereich oder in einem niedrigen Volllastbereich bevorzugt. Zur Realisierung dieser teilweisen Fluchtung ist es bevorzugt, dass das beweglich angeordnete Hinterkantenelement und/oder die Blende in einer Zwischenposition angeordnet ist bzw. sind, die sich zwischen der Öffnungsposition und der Schließposition befindet.

Gemäß einer weiteren bevorzugten Ausführungsvariante des Rotorblatts ist vorgesehen, dass das beweglich angeordnete Hinterkantenelement und/oder die Blende derart elastisch gelagert ist bzw. sind, dass sich das beweglich angeordnete Hinterkantenelement und/oder die Blende durch eine Fliehkraft von der Schließposition in die Öffnungsposition bewegt, wobei die Fliehkraft im Wesentlichen in Richtung der Rotorblattlänge gerichtet ist und vorzugsweise im Betrieb durch eine Rotation des Rotorblatts um einen Drehpunkt bewirkt wird.

Das beweglich angeordnete Hinterkantenelement und/oder die Blende kann bzw. können beispielsweise mittels einer Feder gelagert sein. Die Feder bewirkt vorzugsweise eine Federkraft in Richtung der Rotorblattlänge auf das beweglich angeordnete Hinterkantenelement und/oder die Blende. Durch diese Federkraft in Richtung der Rotorblattlänge wird die Feder bei einer Fliehkraft durch das beweglich angeordnete Hinterkantenelement und/oder die Blende belastet. Je stärker die Fliehkraft, desto mehr kann sich das beweglich angeordnete Hinterkantenelement und/oder die Blende bewegen. Dies kann beispielsweise dazu führen, dass bis zu einer bestimmten Rotationsgeschwindigkeit des Rotors, an dem das Rotorblatt angeordnet ist, keine Öffnung der Akustiköffnung erfolgt. Bei höherer Drehzahl wird die Fliehkraft derart groß, dass die Auslenkung des beweglich angeordneten Hinterkantenelements und/oder der Blende derart groß wird, dass zumindest eine teilweise Öffnung der Akustiköffnung erfolgt. Die Federkraft wirkt vorzugsweise der Fliehkraft entgegen. Da die Fliehkraft eines Rotorblatts, das an einem Rotor einer Windenergieanlage angeordnet ist, in der Regel in Richtung der Rotorblattlänge gerichtet ist, ist es bevorzugt, dass die Federkraft in Richtung der Rotorblattlänge wirkt.

Eine weitere bevorzugte Fortbildung des Rotorblatts zeichnet sich dadurch aus, dass das beweglich angeordnete Hinterkantenelement und/oder die Blende mit einem Aktor gekoppelt ist bzw. sind, der eingerichtet ist, das beweglich angeordnete Hinterkantenelement und/oder die Blende zwischen der Schließposition und der Öffnungsposition zu bewegen.

Der Aktor ist mit dem beweglich angeordneten Hinterkantenelement und/oder der Blende derart gekoppelt, dass das beweglich angeordnete Hinterkantenelement und/oder die Blende mittels des Aktors bewegt werden können. Durch diese von dem Aktor bewirkte Bewegung kann die Akustiköffnung geöffnet und/oder verschlossen werden. Somit kann beispielsweise auch unabhängig von einer wirkenden Fliehkraft eine Öffnung oder Schließung der Akustiköffnung bewirkt werden. Vorzugsweise umfasst das Rotorblatt eine Steuerungsvorrichtung, die mit dem Aktor gekoppelt ist. Die Steuerungsvorrichtung kann vorzugsweise auf Basis von vorbestimmten Parametern den Aktor derart ansteuern, dass die Akustiköffnung in Abhängigkeit von den im Vorherigen genannten Parameter geöffnet und/oder geschlossen wird. Insbesondere ist es bevorzugt, dass der Aktor als eine Piezokeramik ausgebildet ist oder diese umfasst.

In einer weiteren bevorzugten Ausführungsvariante ist vorgesehen, dass das beweglich angeordnete Hinterkantenelement und/oder die Blende derart angeordnet sind und vorzugsweise der Aktor ausgebildet ist, dass dieses bzw. diese hochfrequent zwischen der Schließposition und der Öffnungsposition bewegbar sind, wobei beispielsweise eine Frequenz von 200 Hz vorgesehen ist. Unter dem Begriff "hochfrequent" ist insbesondere eine Frequenz zwischen 100 Hz und 2 kHz zu verstehen.

In einer weiteren bevorzugten Fortbildung ist vorgesehen, dass die mindestens eine Akustiköffnung derart angeordnet und ausgebildet ist, dass in die Akustiköffnung eingedrungene Partikel durch eine Fliehkraft entfernbar sind.

Im Betrieb wird ein Rotorblatt regelmäßig durch Partikel kontaminiert. Beispielsweise treffen eine Vielzahl von Insekten oder pflanzlichen Bestandteilen auf das Rotorblatt auf. Diese Partikel können sich in der mindestens einen Akustiköffnung festsetzen und somit die Öffnung verstopfen. Infolge dessen kann die im Vorherigen genannte Funktion der verminderten Schallemission weniger oder nicht wirken. Aufgrund dessen ist es bevorzugt, dass die Akustiköffnung derart ausgebildet ist, dass das Partikel herausgeschleudert werden kann. Insbesondere ist es bevorzugt, dass dies ohne zusätzlichen Eingriff von einem Bediener erfolgt. Daher ist es insbesondere bevorzugt, dass das Partikel durch die Fliehkraft hinausgeschleudert wird.

Darüber hinaus ist es bevorzugt, dass die mindestens eine Akustiköffnung konusförmig ausgebildet ist. Insbesondere ist es bevorzugt, dass der größere Querschnitt der konusförmigen Akustiköffnung in einem Bereich angrenzend an die Druckseite und/oder an die Saugseite angeordnet ist. Insbesondere ist es bevorzugt, dass die Akustiköffnung doppelkonisch ausgeführt ist, sodass in Richtung der Druckseite und der Saugseite jeweils ein großer Querschnitt vorliegt und zwischen der Druckseite und der Saugseite ein kleinerer Querschnitt. Infolge dessen kann ein Partikel in vorteilhafter Weise durch eine Fliehkraft aus der Akustiköffnung entfernt werden.

In einer weiteren bevorzugten Ausführungsvariante ist vorgesehen, dass die mindestens eine Akustiköffnung eine Durchtrittsrichtung aufweist, die in Richtung der Profildicke und vorzugsweise in Richtung der Rotorblattlänge ausgerichtet ist, und ferner vorzugsweise v-förmig ausgebildet ist.

In einer weiteren bevorzugten Fortbildung des Rotorblatts ist vorgesehen, dass die mindestens eine Akustiköffnung einen ersten Eintritt und einen zweiten Eintritt aufweist, wobei sich die Akustiköffnung zwischen dem ersten Eintritt und dem zweiten Eintritt mit einer Durchtrittsrichtung erstreckt, wobei der erste Eintritt auf der Druckseite und der zweite Eintritt auf der Saugseite angeordnet ist und vorzugsweise die Durchtrittsrichtung im Wesentlichen gerade oder im Wesentlichen v-förmig mit Richtungsanteilen in Richtung der Profildicke und/oder der Rotorblattlänge ausgebildet ist, und/oder der erste Eintritt und der zweite Eintritt auf der Druckseite oder auf der Saugseite angeordnet ist und die Durchtrittsrichtung gebogen, insbesondere kalbkreisförmig oder halbovalförmig ist.

Darüber hinaus kann es bevorzugt sein, dass der die mindestens eine Akustiköffnung aufweisende Hinterkantenbereich durch ein additives Verfahren hergestellt ist. Insbesondere die im Vorherigen genannte poröse Struktur, die vorzugsweise von dem Hinterkantenbereich aufgewiesen wird, kann in vorteilhafter Weise durch ein additives Verfahren hergestellt werden. Darüber hinaus besteht ein Vorteil in der additiven Herstellungsweise darin, dass die Vielzahl von Akustiköffnungen derart ausgebildet sein können, dass Partikel durch eine Fliehkraft hinausgeschleudert werden.

Gemäß einem weiteren Aspekt wird die eingangs genannte Aufgabe gelöst durch einen Rotor für eine Windenergieanlage mit einem Rotorblatt nach einem der vorherigen Ausführungsvarianten.

Gemäß einem weiteren Aspekt wird die eingangs genannte Aufgabe gelöst durch eine Windenergieanlage mit einem Rotor nach dem vorherigen Aspekt und/oder einem Rotorblatt nach einem der im Vorherigen beschriebenen Ausführungsvarianten.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen des Rotorblatts verwiesen.

Bevorzugte Ausführungsbeispiele werden exemplarisch anhand der beiliegenden Figuren erläutert. Es zeigen:
- Figur 1:: eine schematische, dreidimensionale Ansicht einer Windenergieanlage;
- Figur 2:: eine schematische, zweidimensionale Ansicht eines Profilschnitts;
- Figur 3:: eine weitere schematische, zweidimensionale Ansicht eines Profilschnitts;
- Figur 4:: eine schematische, zweidimensionale Ansicht des in Figur 1 gezeigten Rotorblatts;
- Figur 5:: eine schematische, dreidimensionale Ansicht eines Hinterkantenbereichs;
- Figur 6:: eine schematische, zweidimensionale Detailansicht von Akustiköffnungen in einem Hinterkantenbereich in einer Schließposition;
- Figur 7:: eine schematische, zweidimensionale Ansicht von Akustiköffnungen in einem Hinterkantenbereich in einer Öffnungsposition;
- Figur 8:: eine schematische, zweidimensionale Schnittansicht eines Hinterkantenbereichs;
- Figur 9:: eine weitere schematische, zweidimensionale Schnittansicht eines Hinterkantenbereichs;
- Figur 10:: eine weitere schematische, zweidimensionale Schnittansicht eines Hinterkantenbereichs;
- Figur 11:: eine schematische, dreidimensionale Ansicht eines Hinterkantenbereichs;
- Figur 12:: eine Detailansicht der in Figur 11 gezeigten Profilelemente;
- Figur 13:: eine schematische, zweidimensionale Ansicht der in Figur 12 gezeigten Profilelemente; und
- Figur 14:: schematische, zweidimensionale Ansichten eines weiteren Beispiels von Profilelementen.

In den Figuren sind gleiche oder im Wesentlichen funktionsgleiche bzw. -ähnliche Elemente mit den gleichen Bezugszeichen bezeichnet.

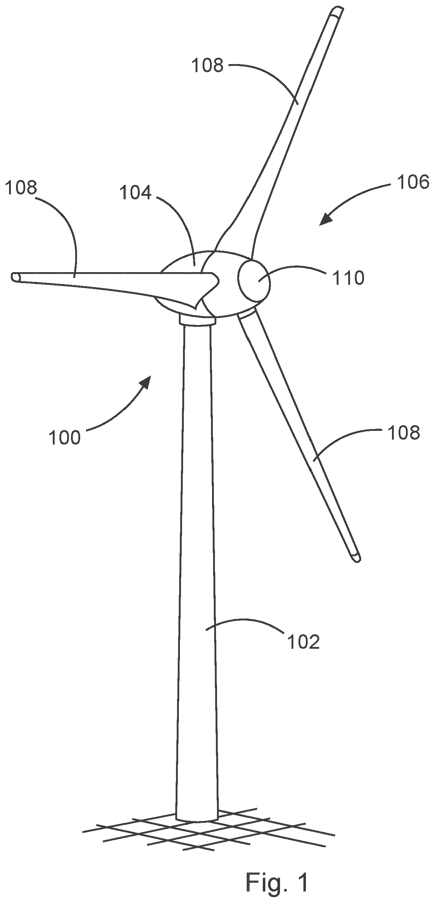

Figur 1 zeigt eine schematische, dreidimensionale Ansicht einer Windenergieanlage 100. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie.

Zumindest eines der Rotorblätter 108 weist einen an eine Hinterkante angrenzenden Hinterkantenbereich auf, der sich mit einer Bereichserstreckung von weniger als 20 %, insbesondere weniger als 10 %, der Profiltiefe in Richtung der Vorderkante erstreckt. Der Hinterkantenbereich weist mindestens eine Akustiköffnung auf.

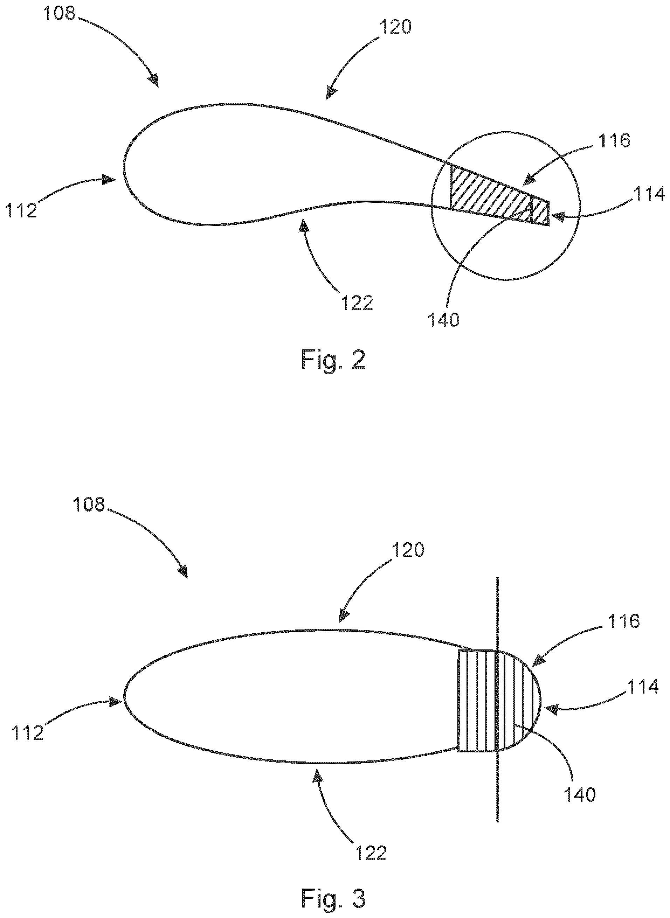

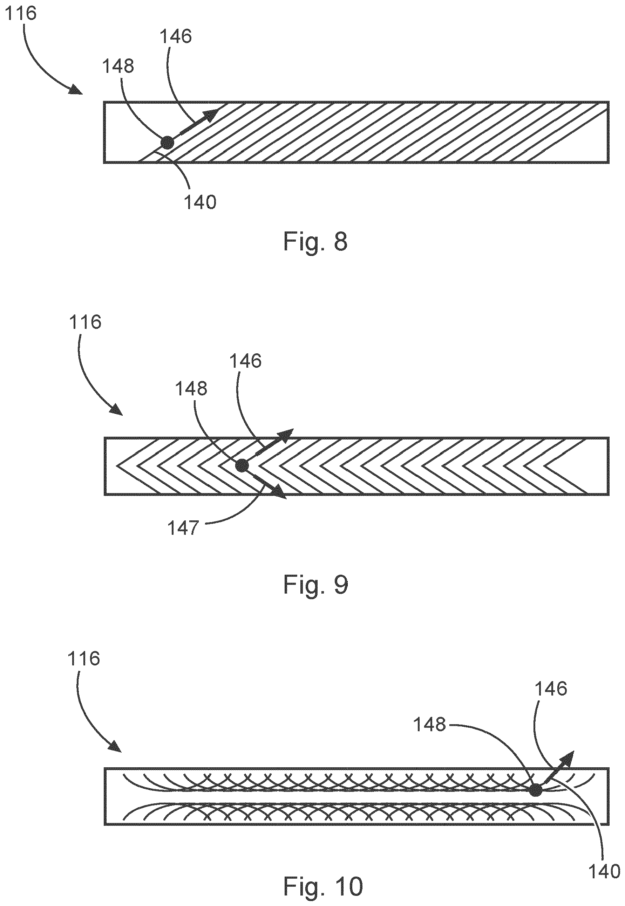

Figur 2 zeigt eine schematische, zweidimensionale Ansicht eines Profilschnitts. Das Rotorblatt 108 erstreckt sich zwischen der Vorderkante 112 und der Hinterkante 114 mit einer Profiltiefe. Zwischen der Saugseite 120 und der Druckseite 122 stellt sich eine Profildicke ein. Angrenzend an die Hinterkante 114 weist das Rotorblatt einen Hinterkantenbereich 116 auf. Der Hinterkantenbereich 116 weist eine Akustiköffnung 140 auf. In Figur 3 ist ein weiterer Profilschnitt des Rotorblatts 108 gezeigt. Der Hinterkantenbereich 116 weist insbesondere eine Vielzahl von Akustiköffnungen 140 auf. Die Akustiköffnungen erstrecken sich von der Saugseite 120 als Durchgangsöffnungen hin zur Druckseite 122. Die Ausrichtung der Akustiköffnungen 140, insbesondere deren Durchtrittsachse, ist im Wesentlichen parallel zu der Profildicke ausgerichtet. Beispielhafte Schnitte entlang einer Achse A sind in Figuren 8 bis 10 gezeigt.

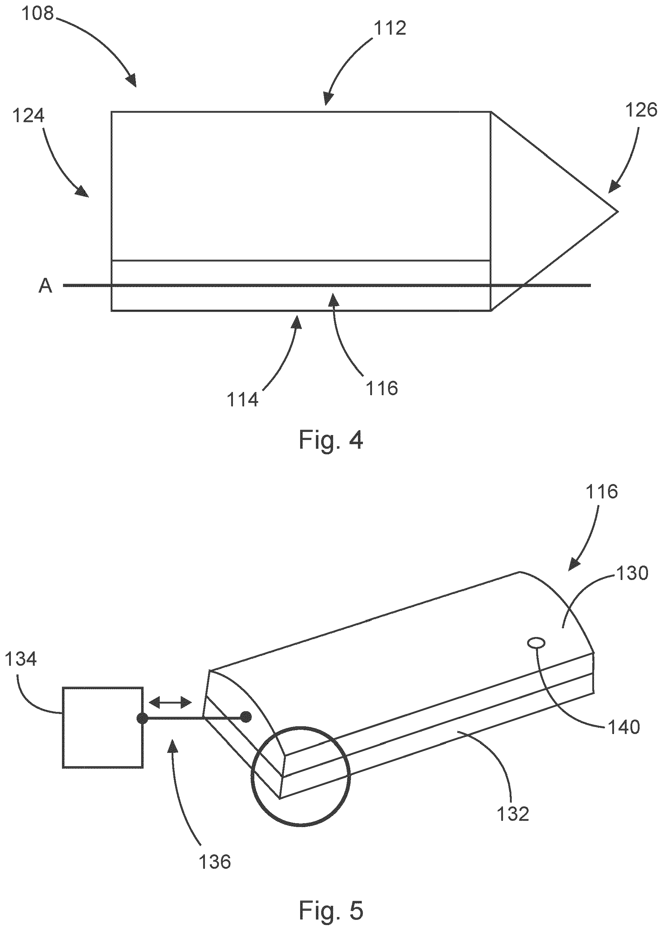

Figur 4 zeigt eine schematische, zweidimensionale Ansicht des in Figur 1 gezeigten Rotorblatts 108. Das Rotorblatt 108 erstreckt sich mit einer Rotorblattlänge von einer Blattwurzel 124 hin zu einer Blattspitze 126. Orthogonal hierzu erstreckt sich das Rotorblatt 108 von der Vorderkante 112 hin zu der Hinterkante 114 mit der Profiltiefe. Der Hinterkantenbereich 116 erstreckt sich ausgehend von der Hinterkante 114 in Richtung der Vorderkante 112. Diese Erstreckung in Richtung der Vorderkante 112 erfolgt mit einer Bereichserstreckung, die weniger als 20 % der Profiltiefe beträgt. In Richtung der Rotorblattlänge erstreckt sich der Hinterkantenbereich mit einer Hinterkantenbereich-Längserstreckung, die geringer ist als die Rotorblattlänge. Auch hier ist die Achse A eingezeichnet, entlang derer beispielhafte Schnitte in Figuren 8 bis 10 verlaufen.

Figur 5 zeigt eine schematische, dreidimensionale Ansicht eines Hinterkantenbereichs 116. Der Hinterkantenbereich 116 wird durch ein saugseitiges Hinterkantenelement 130 und ein druckseitiges Hinterkantenelement 132 ausgebildet. Das saugseitige Hinterkantenelement 130 und das druckseitige Hinterkantenelement 132 sind in Richtung der Profildicke benachbart zueinander angeordnet. Die Akustiköffnung 140 führt durch die Hinterkantenelemente 130, 132 hindurch. Hierfür weist das saugseitige Hinterkantenelement 130 eine saugseitige Durchgangsöffnung und das druckseitige Hinterkantenelement 132 eine druckseitige Durchgangsöffnung auf.

Wenn diese Durchgangsöffnungen miteinander fluchten, ist die Akustiköffnung 140 geöffnet. Wenn die Durchgangsöffnungen nicht miteinander fluchten, ist die Akustiköffnung 140 verschlossen. Um ein Schließen und ein Öffnen der Akustiköffnung 140 zu ermöglichen, ist das saugseitige Hinterkantenelement 130 beweglich angeordnet. Ferner ist das saugseitige Hinterkantenelement 130 über ein Koppelelement 136 mit einem Aktor 134 gekoppelt. Mittels des Aktors 134 kann das saugseitige Hinterkantenelement 130 in Richtung der Rotorblattlänge hin- und herbewegt werden. Durch das Hin- und Herbewegen des saugseitigen Hinterkantenelements 130 wird die saugseitige Durchgangsöffnung ebenfalls bewegt. Somit kann mittels des Aktors 134 eingestellt werden, ob die saugseitige Durchgangsöffnung mit der druckseitigen Durchgangsöffnung fluchtet und somit die Akustiköffnung 140 geöffnet ist oder ob die Durchgangsöffnungen nicht miteinander fluchten und die Akustiköffnung 140 somit verschlossen ist. Durch das Bewegen des saugseitigen Hinterkantenelements 130 wird dieses zwischen einer Öffnungsposition und einer Schließposition hin- und herbewegt.

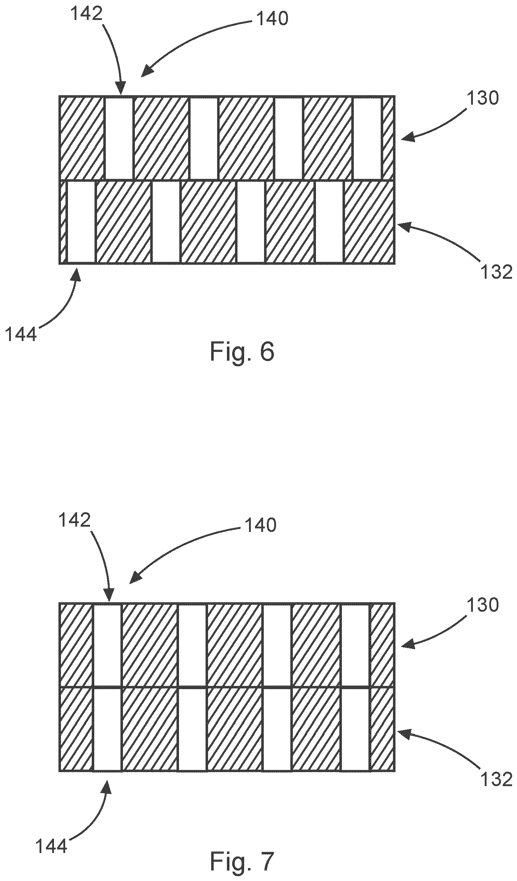

In den Figuren 6 und 7 ist die Funktion der Öffnungsposition und der Schließposition dargestellt. Die Akustiköffnung 140 wird durch die saugseitige Durchgangsöffnung 142 und die druckseitige Durchgangsöffnung 144 ausgebildet. In der in Figur 6 dargestellten Schließposition weist die saugseitige Durchgangsöffnung 142 keine gemeinsame Durchgangsachse mit der druckseitigen Durchgangsöffnung 144 auf. Die Akustiköffnung 140 ist daher verschlossen.

In der Figur 7 ist das saugseitige Hinterkantenelement 130 derart verschoben, dass die saugseitige Durchgangsöffnung 142 mit der druckseitigen Durchgangsöffnung 144 fluchtet und eine gemeinsame Durchgangsachse aufweist. Infolge dessen ist die Akustiköffnung 140 geöffnet und somit in einer Öffnungsposition.

In den Figuren 8 bis 10 sind unterschiedliche Ausbildungen der Akustiköffnungen 140 in einem Querschnitt entlang der Achsen A der Figuren 3 und 4 dargestellt. In Figur 8 ist eine Durchgangsöffnung mit einer geraden Durchgangsachse gezeigt, die Richtungsanteile in Richtung der Rotorblattlänge und der Profildicke aufweist. In Figur 9 ist die Akustiköffnung 140 v-förmig ausgebildet, jeweils auch mit Richtungsanteilen in Richtung der Rotorblattlänge und der Rotorblattdicke. Durch die Ausbildung dieser Akustiköffnungen 140 kann ein Partikel 148 durch eine Fliehkraft in Fliehkraftrichtung 146, 147 aus der Akustiköffnung 140 herausgeschleudert werden. Die in Figur 10 gezeigten Akustiköffnungen 140 weisen jeweils Eintritte und Austritte auf, die auf einer Seite, beispielsweise der Druckseite, angeordnet sind.

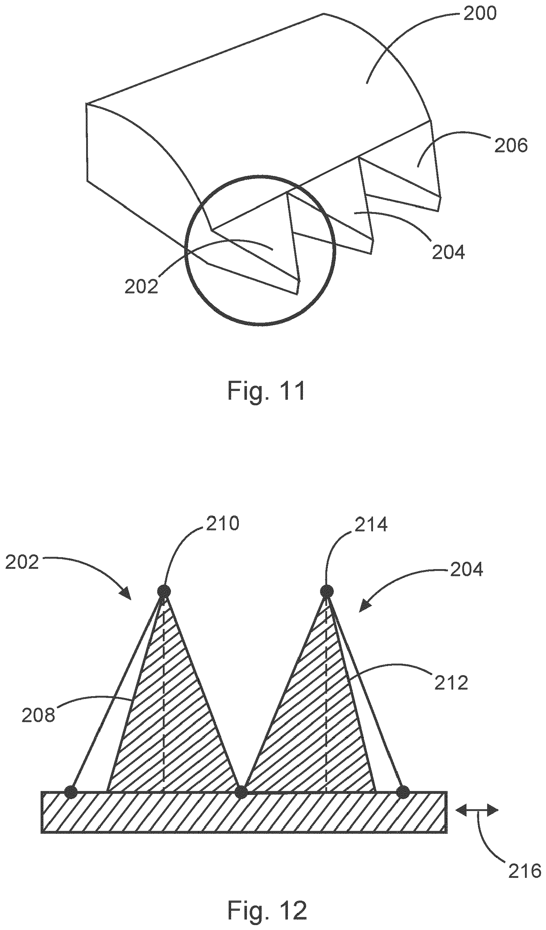

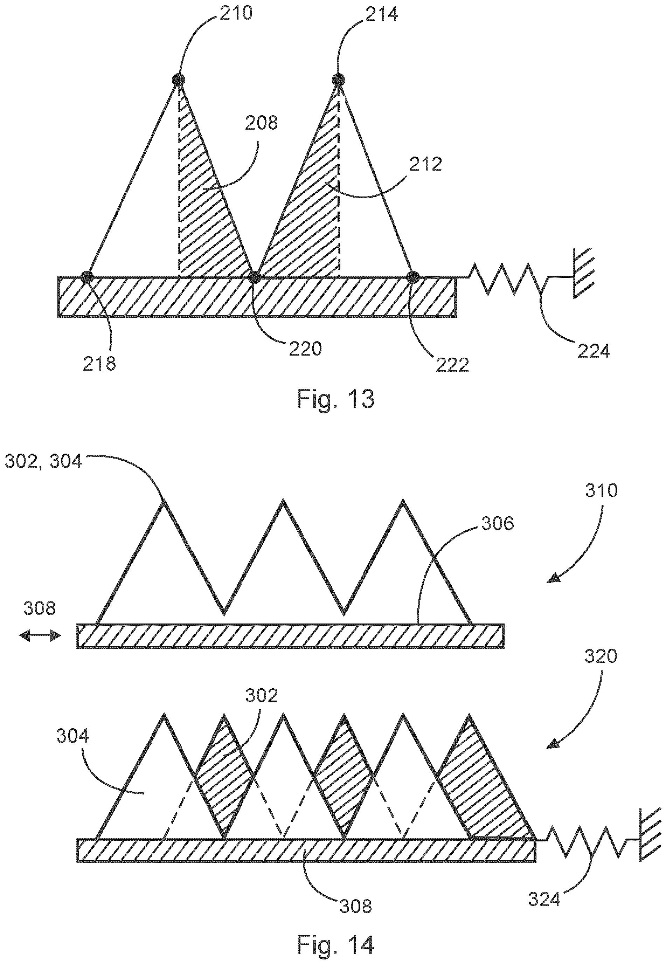

Figur 11 zeigt eine schematische, dreidimensionale Ansicht eines Hinterkantenbereichs. Das Hinterkantensegment 200 weist ein erstes Profilelement 202, ein zweites Profilelement 204 und ein drittes Profilelement 206 auf. In Figur 12 ist gezeigt, dass das erste Profilelement 202 ein erstes bewegliches Segment 208 aufweist. Das erste bewegliche Segment 208 ist an dem ersten Drehpunkt 210 beweglich angeordnet. Das zweite Profilelement 204 weist analog zum ersten Profilelement 202 ein zweites bewegliches Segment 212 mit einem zweiten Drehpunkt 214 auf. Durch die Drehpunkte können die beweglichen Segmente 208, 212 in die Bewegungsrichtung 216 bewegt werden. Durch diese Anordnung kann die Breite der Profilelemente 202, 204, 206 vergrößert werden. Dies wird in vorteilhafter Weise auch dadurch erreicht, dass das erste Profilelement 202 an einem Festlager 218 angeordnet ist und die weiteren Lagerpunkte 220, 222 verschiebbar angeordnet sind, wie es insbesondere in der Figur 13 gezeigt ist. Das System wird ferner dadurch realisiert, dass die Profilelemente 202, 204, 206 mit einem Federelement 224 gekoppelt sind.

Bei kleinen Windgeschwindigkeiten bzw. Drehzahlen wirkt noch keine große Fliehkraft und die Federkraft des Federelementes 224 kann die Fliehkraft kompensieren und hält die Profilelemente so fest, dass auf den Zähnen ein großer Überlappungsbereich existiert und das Verhältnis Breite zu Länge der Segmente noch relativ klein ist. Erhöht sich die Windgeschwindigkeit, erhöht sich die Drehzahl und dadurch nimmt die Fliehkraft zu. Da die Profilelemente auf der einen Seite fixiert ist, wirkt eine Kraft auf die Segmente und die Zähne werden in die Breite gezogen.

Die Fähigkeit zur Schallreduktion der Profilelemente 202, 204, 206 kann damit während des Betriebs angepasst werden, so dass sich der Effizienzbereich vergrößert bzw. in bestimmten Geschwindigkeitsbereichen die Lärmemission der Anlage beeinflusst werden. Insbesondere kann in einem unteren Geschwindigkeitsbereich mit einer anderen Geometrie gearbeitet werden als bei Nennleistung. Besonders bevorzugt ist hierbei die Federkraft des beispielhaften Federelementes 224 auf die Betriebskennlinie abgestimmt, so dass je nach Erfordernis die Zackenbreite über die Windgeschwindigkeit auf die akustisch optimale Breite angepasst werden kann. Die Akustiköffnung ist in diesem Bereich der freibleibende Bereich zwischen den Profilelementen 202, 204, 206, der sich bei Änderung der Geometrie der Profilelemente 202, 204, 206 verändert.

Figur 14 zeigt zwei schematische, zweidimensionale Ansichten von Profilelementen, die mit sämtlichen der beschriebenen Hinterkantensegmente zusammenwirken können und ein weiteres Beispiel von Akustiköffnungen bilden.

Die Profilelemente 302, 304 sind als mehrlagiger Aufbau ausgeführt, wobei die Lagen der Profilelemente 302, 304 gegeneinander entlang einer Richtung 308 verschiebbar sind, wodurch verschiedene Geometrien erhalten werden. Jedes der Profilelemente 302, 304 weist in diesem Beispiel eine Mehrzahl von Zacken, die auch als Serrations bezeichnet werden, auf. In anderen Ausführungen können die einzelnen Zacken auch als einzelne Profilelemente ausgebildet sein. Die Verschiebung der Profilelemente 302, 304 kann passiv aber auch aktiv gesteuert werden. Im passiven Fall befinden sich, ebenso wie in Fig. 12 und 13, am spannweitigen Ende wenigstens eines der Profilelemente 302, 304 elastische Elemente, in diesem Beispiel ein Federelement 324 an dem Profilelement 302. Je nach Drehzahl variiert die Kraft auf das Federelement 324 und die Profilelemente 302, 304 können, getrieben durch die Fliehkraft, sich nach außen bewegen und gegen eine Federkraft arbeiten. Hierbei wird vorzugsweise die Geometrie der Profilelemente 302, 304 und die elastische Steifigkeit des Federelementes 324 aufeinander abgestimmt.

Im aktiven Fall werden statt den elastischen Elementen Aktuatoren, wie z. B. Piezoaktuatoren verbaut, welche aktiv die Bewegung der Profilelemente steuern. Dadurch kann im Betriebsbereich der Windenergieanlage aktiv die Schallemission beeinflusst werden und so ein gewünschtes Schallprofil erzielt werden.

Eine bevorzugte Ausgestaltung der Profilelemente 302, 304 ist wie in Fig. 14 gezeigt ein Aufbau aus Segmenten von beispielhaft drei Zacken, die an dem Zackengrund miteinander verbunden sind und die auf einer Schiene 306 verschiebbar gelagert sind. In Fig. 14 ist ein Zustand 320 beim Start der Windenergieanlage bzw. bei niedrigen Drehzahlen gezeigt, bei dem die Profilelemente 302 und 304 zueinander verschoben sind. Mit zunehmender Drehzahl wird Schicht des Profilelelementes 302 verschoben, so dass sich ein Zustand 310 - insbesondere bei Nennleistung - einstellt, bei dem die Schicht des Profilelelementes 302 kongruent zur Schicht des Profilelementes 304 liegt.

### BEZUGSZEICHEN

- 100: Windenergieanlage
- 102: Turm
- 104: Gondel
- 106: Rotor
- 108: Rotorblätter
- 110: Spinner
- 112: Vorderkante
- 114: Hinterkante
- 116: Hinterkantenbereich
- 140: Akustiköffnung
- 120: Saugseite
- 122: Druckseite
- 124: Blattwurzel
- 126: Blattspitze
- 130: saugseitiges Hinterkantenelement
- 132: druckseitiges Hinterkantenelement
- 134: Aktor
- 136: Koppelelement
- 142: saugseitige Durchgangsöffnung
- 144: druckseitige Durchgangsöffnung
- 147: Fliehkraftrichtung
- 146: Fliehkraftrichtung
- 148: Partikel
- 200: Hinterkantensegment
- 202: erstes Profilelement
- 204: zweites Profilelement
- 206: drittes Profilelement
- 208: erstes bewegliches Segment
- 210: erster Drehpunkt
- 212: zweites bewegliches Segment
- 214: zweiter Drehpunkt
- 216: Bewegungsrichtung
- 218: Festlager
- 220, 222: verschiebbare Lagerpunkte
- 224: Federelement
- 302, 304: Profilelement
- 306: Schiene
- 308: Richtung
- 310: Zustand
- 320: Zustand
- 324: Federelement

## Patentansprüche

1. Rotorblatt (108) für eine Windenergieanlage (100) mit einer Rotorblattlänge, einer sich zwischen einer Vorderkante (112) und einer Hinterkante (114) einstellenden Profiltiefe und einer sich zwischen einer Saugseite (120) und einer Druckseite (122) einstellenden Profildicke,
- wobei das Rotorblatt (108) einen an die Hinterkante (114) angrenzenden Hinterkantenbereich (116) aufweist, der sich mit einer Bereichserstreckung von weniger als 20%, insbesondere weniger als 10%, der Profiltiefe in Richtung der Vorderkante (112) erstreckt,
- wobei der Hinterkantenbereich (116) mindestens eine Akustiköffnung (140) aufweist,
**dadurch gekennzeichnet, dass**
zumindest ein Abschnitt des Hinterkantenbereichs (116) durch ein saugseitiges Hinterkantenelement (130) und ein druckseitiges Hinterkantenelement (132) ausgebildet ist, die in Richtung der Profildicke benachbart zueinander angeordnet sind und wobei zumindest eines der Hinterkantenelemente (130, 132) und/oder eine Blende zwischen den Hinterkantenelementen (130, 132) beweglich angeordnet ist, und vorzugsweise die mindestens eine Akustiköffnung (140) durch eine saugseitige Durchgangsöffnung (142) im saugseitigen Hinterkantenelement und durch eine druckseitige Durchgangsöffnung (144) im druckseitigen Hinterkantenelement ausgebildet ist, wobei
- die mindestens eine Akustiköffnung (140) in einer Öffnungsposition des beweglich angeordneten Hinterkantenelements geöffnet ist und in einer Schließposition des beweglich angeordneten Hinterkantenelements im Wesentlichen verschlossen ist, und/oder
- die mindestens eine Akustiköffnung (140) in einer Öffnungsposition der Blende geöffnet ist und in einer Schließposition der Blende im Wesentlichen verschlossen ist.

2. Rotorblatt (108) nach dem vorherigen Anspruch, wobei das beweglich angeordnete Hinterkantenelement und/oder die Blende derart anordenbar sind, dass die saugseitige Durchgangsöffnung (142) und die druckseitige Durchgangsöffnung (144) teilweise fluchten, insbesondere indem das beweglich angeordnete Hinterkantenelement und/oder die Blende zwischen der Öffnungsposition und der Schließposition anordenbar ist bzw. sind.

3. Rotorblatt (108) nach Anspruch 1 oder 2, wobei das beweglich angeordnete Hinterkantenelement und/oder die Blende derart elastisch gelagert ist bzw. sind, dass sich das beweglich angeordnete Hinterkantenelement und/oder die Blende durch eine Fliehkraft von der Schließposition in die Öffnungsposition bewegt, wobei die Fliehkraft im Wesentlichen in Richtung der Rotorblattlänge gerichtet ist und vorzugsweise im Betrieb durch eine Rotation des Rotorblatts (108) um einen Drehpunkt bewirkt wird.

4. Rotorblatt (108) nach einem der vorherigen Ansprüche 1-3, wobei das beweglich angeordnete Hinterkantenelement und/oder die Blende mit einem Aktor (134) gekoppelt ist bzw. sind, der eingerichtet ist, das beweglich angeordnete Hinterkantenelement und/oder die Blende zwischen der Schließposition und der Öffnungsposition zu bewegen.

5. Rotorblatt (108) nach dem vorherigen Anspruch 4, wobei der Aktor (134) als eine Piezokeramik ausgebildet ist oder diese umfasst.

6. Rotorblatt (108) nach einem der vorherigen Ansprüche 1-5, wobei das beweglich angeordnete Hinterkantenelement und/oder die Blende derart angeordnet sind und vorzugsweise der Aktor (134) ausgebildet ist, dass dieses bzw. diese hochfrequent zwischen der Schließposition und der Öffnungsposition bewegbar sind, wobei beispielsweise eine Frequenz von 200 Hz vorgesehen ist.

7. Rotorblatt (108) nach einem der vorherigen Ansprüche, wobei die mindestens eine Akustiköffnung derart angeordnet und ausgebildet ist, dass in die Akustiköffnung (140) eingedrungene Partikel durch eine Fliehkraft entfernbar sind.

8. Rotorblatt (108) nach einem der vorherigen Ansprüche, wobei die mindestens eine Akustiköffnung (140) konusförmig ausgebildet ist.

9. Rotorblatt (108) nach einem der vorherigen Ansprüche, wobei die mindestens eine Akustiköffnung (140) eine Durchtrittsrichtung aufweist, die in Richtung der Profildicke und vorzugsweise in Richtung der Rotorblattlänge ausgerichtet ist, und ferner vorzugsweise v-förmig ausgebildet ist.

10. Rotorblatt (108) nach einem der vorherigen Ansprüche, wobei die mindestens eine Akustiköffnung (140) einen ersten Eintritt und einen zweiten Eintritt aufweist, wobei sich die Akustiköffnung zwischen dem ersten Eintritt und dem zweiten Eintritt mit einer Durchtrittsrichtung erstreckt, wobei
- der erste Eintritt auf der Druckseite und der zweite Eintritt auf der Saugseite angeordnet ist und vorzugsweise die Durchtrittsrichtung im Wesentlichen gerade oder im Wesentlichen v-förmig mit Richtungsanteilen in Richtung der Profildicke und/oder der Rotorblattlänge ausgebildet ist, und/oder
- der erste Eintritt und der zweite Eintritt auf der Druckseite oder auf der Saugseite angeordnet ist und die Durchtrittsrichtung gebogen, insbesondere kalbkreisförmig oder halbovalförmig ist.

11. Rotorblatt (108) nach einem der vorherigen Ansprüche, wobei der die mindestens eine Akustiköffnung (140) aufweisende Hinterkantenbereich (116) durch ein additives Verfahren hergestellt ist.

12. Rotor für eine Windenergieanlage (100) mit einem Rotorblatt (108) nach einem der vorherigen Ansprüche 1-11.

13. Windenergieanlage (100) mit einem Rotor nach Anspruch 12 und/oder einem Rotorblatt (108) nach einem der Ansprüche 1-11.

## Claims

1. Rotor blade (108) for a wind power installation (100), having a rotor blade length, having a profile depth established between a leading edge (112) and a trailing edge (114), and having a profile thickness established between a suction side (120) and a pressure side (122),
- wherein the rotor blade (108) has a trailing edge region (116), which adjoins the trailing edge (114) and extends with a region extent of less than 20%, in particular less than 10%, of the profile depth in the direction of the leading edge (112),
- wherein the trailing edge region (116) has at least one acoustic opening (140),
**characterized in that**
at least one section of the trailing edge region (116) is formed by a suction-side trailing edge element (130) and a pressure-side trailing edge element (132), which are arranged adjacent to one another in the direction of the profile thickness, and wherein at least one of the trailing edge elements (130, 132) and/or a screen between the trailing edge elements (130, 132) are/is arranged movably, and preferably the at least one acoustic opening (140) is formed by a suction-side passage opening (142) in the suction-side trailing edge element and by a pressure-side passage opening (144) in the pressure-side trailing edge element,
- wherein the at least one acoustic opening (140) is open in an open position of the movably arranged trailing edge element and is substantially closed in a closed position of the movably arranged trailing edge element,
and/or
- the at least one acoustic opening (140) is open in an open position of the screen and is substantially closed in a closed position of the screen.

2. Rotor blade (108) according to the preceding claim, wherein the movably arranged trailing edge element and/or the screen can be arranged in such a way that the suction-side passage opening (142) and the pressure-side passage opening (144) are partially aligned, in particular in that the movably arranged trailing edge element and/or the screen can be arranged between the open position and the closed position.

3. Rotor blade (108) according to Claim 1 or 2, wherein the movably arranged trailing edge element and/or the screen are/is mounted elastically in such a way that the movably arranged trailing edge element and/or the screen are/is moved from the closed position into the open position by a centrifugal force, wherein the centrifugal force is directed substantially in the direction of the rotor blade length and is preferably induced during operation by a rotation of the rotor blade (180) about a centre of rotation.

4. Rotor blade (108) according to one of the preceding Claims 1-3, wherein the movably arranged trailing edge element and/or the screen are/is coupled to an actuator (134) which is configured to move the movably arranged trailing edge element and/or the screen between the closed position and the open position.

5. Rotor blade (108) according to the preceding Claim 4, wherein the actuator (134) is in the form of a piezoceramic or comprises the latter.

6. Rotor blade (108) according to one of the preceding Claims 1-5, wherein the movably arranged trailing edge element and/or the screen are/is arranged, and preferably the actuator (134) is designed, such that this/these can be moved at high frequency between the closed position and the open position, wherein for example a frequency of 200 Hz is provided.

7. Rotor blade (108) according to one of the preceding claims, wherein the at least one acoustic opening is arranged and formed in such a way that particles which have entered the acoustic opening (140) can be removed by way of a centrifugal force.

8. Rotor blade (108) according to one of the preceding claims, wherein the at least one acoustic opening (140) is of conical form.

9. Rotor blade (108) according to one of the preceding claims, wherein the at least one acoustic opening (140) has a passage direction oriented in the direction of the profile thickness and preferably in the direction of the rotor blade length and is furthermore preferably V-shaped.

10. Rotor blade (108) according to one of the preceding claims, wherein the at least one acoustic opening (140) has a first entry and a second entry, wherein the acoustic opening extends with a passage direction between the first entry and the second entry, wherein
- the first entry is arranged on the pressure side and the second entry is arranged on the suction side
and preferably the passage direction is of substantially straight or substantially V-shaped with directional components in the the direction of the profile thickness and/or the direction of the rotor blade length, and/or
- the first entry and the second entry are arranged on the pressure side or on the suction side and the passage direction is curved, in particular is semicircular or semi-oval.

11. Rotor blade (108) according to one of the preceding claims, wherein the trailing edge region (116), having the at least one acoustic opening (140), is produced by an additive method.

12. Rotor for a wind power installation (100), having a rotor blade (108) according to one of the preceding Claims 1-11.

13. Wind power installation (100) having a rotor according to Claim 12 and/or having a rotor blade (108) according to one of Claims 1-11.

## Revendications

1. Pale de rotor (108) pour une éolienne (100) avec une longueur de pale de rotor, une profondeur de profil s'établissant entre un bord d'attaque (112) et un bord de fuite (114) et une épaisseur de profil s'établissant entre un extrados (120) et un intrados (122),
- dans laquelle la pale de rotor (108) présente une zone de bord de fuite (116) contigüe au bord de fuite (114) qui s'étend avec une étendue de zone de moins de 20 %, en particulier de moins de 10 %, de la profondeur de profil en direction du bord d'attaque (112),
- dans laquelle la zone de bord de fuite (116) présente au moins une ouverture acoustique (140),
**caractérisée en ce que**
au moins une section de la zone de bord de fuite (116) est réalisée par un élément de bord de fuite (130) côté extrados et un élément de bord de fuite (132) côté intrados qui sont agencés de manière contiguë l'un à l'autre en direction de la profondeur de profil et dans lequel au moins un des éléments de bord de fuite (130, 132) et/ou un panneau est agencé de manière mobile entre les éléments de bord de fuite (130, 132), et de préférence l'au moins une ouverture acoustique (140) est réalisée par une ouverture débouchante (142) côté extrados dans l'élément de bord de fuite côté extrados et par une ouverture débouchante (144) côté intrados dans l'élément de bord de fuite côté intrados, dans laquelle
- l'au moins une ouverture acoustique (140) est ouverte dans une position d'ouverture de l'élément de bord de fuite agencé de manière mobile et est sensiblement fermée dans une position de fermeture de l'élément de bord de fuite agencé de manière mobile,
et/ou
- l'au moins une ouverture acoustique (140) est ouverte dans une position d'ouverture du panneau et est sensiblement fermée dans une position de fermeture du panneau.

2. Pale de rotor (108) selon la revendication précédente, dans laquelle l'élément de bord de fuite agencé de manière mobile et/ou le panneau peu(ven))t être agencé(s) de telle manière que l'ouverture débouchante (142) côté extrados et l'ouverture débouchante (144) côté intrados s'alignent partiellement, en particulier en ce que l'élément de bord de fuite agencé de manière mobile et/ou le panneau peut ou peuvent être agencé(s) entre la position d'ouverture et la position de fermeture.

3. Pale de rotor (108) selon la revendication 1 ou 2, dans laquelle l'élément de bord de fuite agencé de manière mobile et/ou le panneau est ou sont logé(s) de manière élastique de telle manière que l'élément de bord de fuite agencé de manière mobile et/ou le panneau se déplace(nt) par une force centrifuge de la position de fermeture à la position d'ouverture, dans laquelle la force centrifuge est dirigée sensiblement en direction de la longueur de pale de rotor et de préférence est provoquée en fonctionnement par une rotation de la pale de rotor (108) autour d'un point de rotation.

4. Pale de rotor (108) selon l'une quelconque des revendications précédentes 1 à 3, dans laquelle l'élément de bord de fuite agencé de manière mobile et/ou le panneau est ou sont couplé (s) à un actionneur (134) qui est conçu afin de déplacer l'élément de bord de fuite agencé de manière mobile et/ou le panneau entre la position de fermeture et la position d'ouverture.

5. Pale de rotor (108) selon la revendication précédente 4, dans laquelle l'actionneur (134) est réalisé comme une piézocéramique ou comporte celle-ci.

6. Pale de rotor (108) selon l'une quelconque des revendications précédentes 1 à 5, dans laquelle l'élément de bord de fuite agencé de manière mobile et/ou le panneau est/sont agencé(s), et de préférence l'actionneur (134) est réalisé, de telle manière que celui-ci ou ceux-ci soient mobiles à fréquence élevée entre la position de fermeture et la position d'ouverture, dans laquelle par exemple une fréquence de 200 Hz est prévue.

7. Pale de rotor (108) selon l'une quelconque des revendications précédentes, dans laquelle l'au moins une ouverture acoustique est agencée et réalisée de telle manière que des particules introduites dans l'ouverture acoustique (140) puissent être retirées par une force centrifuge.

8. Pale de rotor (108) selon l'une quelconque des revendications précédentes, dans laquelle l'au moins une ouverture acoustique (140) est réalisée en forme de cône.

9. Pale de rotor (108) selon l'une quelconque des revendications précédentes, dans laquelle l'au moins une ouverture acoustique (140) présente un sens de passage qui est orienté en direction de l'épaisseur de profil et de préférence en direction de la longueur de pale de rotor, et est de plus réalisée de préférence en forme de v.

10. Pale de rotor (108) selon l'une quelconque des revendications précédentes, dans laquelle l'au moins une ouverture acoustique (140) présente une première entrée et une seconde entrée, dans laquelle l'ouverture acoustique s'étend entre la première entrée et la seconde entrée avec un sens de passage, dans laquelle
- la première entrée est agencée sur l'intrados et la seconde entrée est agencée sur l'extrados et le sens de passage est de préférence réalisé sensiblement droit ou sensiblement en forme de v avec des parts directionnelles en direction de la profondeur de profil et/ou de la longueur de pale de rotor, et/ou
- la première entrée et la seconde entrée sont agencées sur l'intrados ou sur l'extrados et le sens de passage est plié, en particulier présente une forme semi-circulaire ou une forme semi-ovale.

11. Pale de rotor (108) selon l'une quelconque des revendications précédentes, dans laquelle la zone de bord de fuite (116) présentant l'au moins une ouverture acoustique (140) est fabriquée par un procédé additif.

12. Rotor pour une éolienne (100) avec une pale de rotor (108) selon l'une quelconque des revendications précédentes 1 à 11.

13. Eolienne (100) avec un rotor selon la revendication 12 et/ou une pale de rotor (108) selon l'une quelconque des revendications 1 à 11.
